# EUROPÄISCHE PATENTSCHRIFT

(11) **EP 1 806 509 B1**
(45) Veröffentlichungstag und Bekanntmachung des Hinweises auf die Patenterteilung: **09.03.2016**
(21) Anmeldenummer: 06027034.5
(22) Anmeldetag: 28.12.2006
(51) Int. Cl.: F16B 37/06

(54) **Funktionselement, Zusammenbauteil bestehend aus dem Funktionselement und einem Blechteil sowie Verfahren zum Anbringen eines Funktionselements**
Functional element, assembly consisting of the functional element and a plate as well as procedure for the attachment of a functional element
Élément fonctionnel, ensemble de montage composés de l'élément fonctionnel et d'une plaque ainsi que d'une procédure de attacher d'un élément fonctionnel

(30) Priorität: 05.01.2006 DE 102006000918
(43) Veröffentlichungstag der Anmeldung: 11.07.2007
(73) Patentinhaber: PROFIL Verbindungstechnik GmbH & Co. KG, 61381 Friedrichsdorf (DE)
(72) Erfinder: Babej, Jiri, 35423 Lich (DE); Vieth, Michael, 61118 Bad Vilbel (DE); Humpert, Richard, 61191 Rosbach v.d.H. (DE)
(74) Vertreter: Manitz, Finsterwald & Partner GbR

(56) Entgegenhaltungen:
- EP-A- 1 512 877
- WO-A-2005/050034
- CH-A- 492 137
- DE-A1- 1 400 934
- DE-A1-102005 024 220
- GB-A- 1 428 723
- GB-A- 2 051 284
- US-A- 3 405 752
- US-A1- 2004 042 870
- US-A1- 2005 163 590

## Beschreibung

Die vorliegende Erfindung betrifft ein Funktionselement mit einem Funktionsabschnitt, mit einem Kopfteil und mit einem im Allgemeinen rohrförmigen Nietabschnitt und einer ringförmigen Blechauflagefläche. Funktionselemente der oben angegebenen Art in Form von Befestigungselementen werden von der Firma Profil Verbindungstechnik GmbH & Co. KG in verschiedenen Formen unter der Bezeichnung SBF, SBK, RSF und RSK seit vielen Jahren vertrieben. Die Elemente selbst sowie ein Verfahren zur Anbringung der Elemente und die verwendeten Matrizen sind unter anderem in den deutschen Patenten DE 34 47 006 C2, DE 34 46 978 C2 und DE 38 35 566 C2 im Detail beschrieben. Ferner wird auf die EP-A-1512877 verwiesen, die ein Funktionselement entsprechend dem Oberbegriff vom Anspruch 1 zeigt mit Verdrehsicherungsnasen am Nietabschnitt im Bereich der Blechanlagefläche des Elements. Eine ähnliche Auslegung ist in den Fig. 13A bis 13D der nicht vorveröffen WO2006/125534 zu finden.

Darüber hinaus wird auf die DE-A-14 00 934, GB-A-1 428 723 A , CH-A-492 137, GB-A-2051 284 und die US-A-3 405 752 verwiesen die alle Funktionselemente der oben angegebenen Art zeigen. Daruber hinaus zeigen die CH-A-492 137, GB-A-2051 284 und die US.A-3 405 752 Nietelemente die auf dem Nietabschnitt, Längsrippen aufweisen die bis zum freien Ende des Nietabschnitts erstrecken. Die US-A-3 405 752 zeigt einen Nietabschnitt mit einer gezagten Stirnseite des Nietabschnitts und die GB-A-2051 284 zeigt einen Nietabschnitt mit Rändelung. Keine dieser Schriften führt zu einem zurück gefalteten Nietbördel, so dass die unten dargestellte Problematik nicht eintritt. Ferner wird auf die DE 14 00 934A1 verwiesen, die ein Nietelement mit V-förmigen Nuten und Spitzen zwischen den Nuten sowohl am Körperteil als auch am Nietabschnitt zeigt, wobei die Nuten und Spitzen am Körperteil mit den Nuten und Spitzen am Nietabschnitt ausgerichtet sind. Das fertige Zusammenbauteil, das entsteht wenn das Nietelement an einem Blechteil angebracht wird ist weder gezeigt noch beschrieben.

Befestigungselemente der eingangs genannten Art werden entweder selbst stanzend im Blechteil eingebracht, so dass das Element einen Stanz- und Nietabschnitt aufweist. Sie können aber auch in vorgelochte Bleche eingebracht werden, wobei die Vorlochung häufig unter Anwendung eines so genannten vorlaufenden Lochstempels erfolgt, der das Blechteil unmittelbar vor bzw. während der Anbringung des Befestigungselements locht. Diese Möglichkeit besteht nur bei Funktionselementen, die als Hohlkörperelementen, beispielsweise Mutterelementen, ausgebildet sind, da der Lochstempel das Befestigungselement durchdringen muss.

Es besteht auch die Möglichkeit, Funktionselemente, die mit einem Stanzund Nietabschnitt versehen sind, so zu verwenden, dass das Blechteil mit dem Stanz- und Nietabschnitt vor bzw. während des Anbringungsvorgangs gelocht wird. Bei Realisierung des Funktionselements als Bolzenelement wird der so entstandene Butzen häufig innerhalb des Rohrnietabschnitts eingeklemmt, wo er auch eine Stützfunktion für den Nietbördel ausüben kann. Bei Hohlkörperelementen wird der Stanzbutzen mittels eines nachlaufenden Ausstoßstiftes, der durch das Hohlkörperelement hindurchgeführt wird, üblicherweise entfernt.

Unabhängig davon, ob das entsprechende Funktionselement selbst stanzend oder mit einem vorgelochten Blech verwendet wird, muss der Stanz- und/oder Nietabschnitt eine nicht unerhebliche Verformungsarbeit am Blechteil leisten, da er im Bereich der Vernietung dafür sorgen muss, dass das Blechteil zu einem rohrförmigen Kragen verformt wird. Der Stanz- und/oder Nietabschnitt wird anschließend um das freistehende Ende des rohrförmigen Kragens radial nach außen verformt, um eine im radialen Querschnitt gesehene U-förmige Aufnahme für den rohrförmigen Kragen zu bilden. Dabei wird der rohrförmige Kragen häufig an sich selbst zurückgefaltet, so dass eine ringförmige Blechfaltung sich innerhalb der durch den umgebördelten Nietabschnitt gebildeten U-förmigen Aufnahme befindet.

Die Forderungen an den Stanz- und/oder Nietabschnitt, egal ob mit oder ohne Vorlochung gearbeitet wird, sind somit, einerseits ausreichende Stabilität aufzuweisen, um die notwendige Verformungsarbeit leisten zu können und andererseits nach der Bildung des Nietbördels eine ausreichende Festigkeit im Bereich des Nietbördels zu erreichen, damit die angestrebte Festigkeit der Verbindung gewährleistet ist. Dies ist für die feste Anbringung eines Gegenstands an das Blechteil erforderlich. Bei einem Befestigungselement bedeutet dies darüber hinaus, dass die Festigkeit des Stanz- und/oder Nietabschnitts der Festigkeitsklasse der Schraube entsprechen muss. Bei der Anbringung des Befestigungselements an das Blechteil darf der Stanz- und/oder Nietabschnitt nicht knicken. Andererseits muss die Verformbarkeit so gegeben sein, dass der Stanz- und/oder Nietabschnitt zu dem im radialen Querschnitt U-förmigen Nietbördel umgeformt werden kann.

Diese gegenläufigen Forderungen führen dazu, dass die radiale Wanddicke des rohrförmigen Stanz- und/oder Nietabschnitts eine klare Zuordnung zu der effektiven Größe des Befestigungsabschnitts haben muss. Unter der Bezeichnung "effektive Größe des Befestigungsabschnitts" ist die Festigkeit, die vom Befestigungselement als solches verlangt wird, zu verstehen.

Selbst wenn die genannten Befestigungselemente in der Praxis seit mehreren Jahren erfolgreich im Einsatz sind, weisen sie einige Nachteile auf, nämlich, dass die Anbringung der Elemente, egal ob mit oder ohne Vorlochung, zur Ausbildung von kleinen Spänen führt, die im Laufe der Zeit im Bereich der Matrizen oder anderswo in den verwendeten Werkzeugen bzw. Pressen festsitzen und zu Verklemmungen und Verformungen führen (von den bearbeiteten Blechteilen, die durchaus unerwünscht sind).

Die Ursache für diese kleinen Späne ist äußerst schwierig nachzuvollziehen, da man das Entstehen der Späne in einer großen Presse nicht visuell betrachten kann, da der Arbeitsbereich aus massivem Metall besteht, und es keine Möglichkeiten gibt, hier sozusagen Betrachtungsfenster vorzusehen, die es ermöglichen würden, das Herstellungsverfahren zu betrachten, ohne den Ablauf des Herstellungsverfahrens wesentlich zu beeinträchtigen. Mit der Ausbildung des Stanz- und/oder Nietabschnitts, die im europäischen Patent 1 430 229 beschrieben und beansprucht ist, gelingt es, die Bildung der Späne wesentlich zu unterdrücken. Dennoch kann es vorkommen, dass die Nietverbindung im Bereich des umgelegten Endes des Nietbördels bzw. im Bereich der Blechkante des zurück gefalteten Blechteils nicht immer perfekt aussieht, und es kann vor allem vorkommen, dass der zurück gefaltete Abschnitt des Blechteils durch das umgelegte freie Ende des Nietabschnitts sichelartig eingeschnitten bzw. eingedrückt wird, so dass Teile des Blechs als Span aus dem Nietwulst herausragen oder gar ganz abgelöst werden, in den Werkzeugen gelangen und für Abdrücke im Blechteil sorgen.

Aufgabe der vorliegenden Erfindung ist es, durch eine besondere Formgebung des Stanz- und/oder Nietabschnitts dafür zu sorgen, dass das zurück gefaltete Blech im Bereich des Nietbördels vollständig vom Nietabschnitt abgedeckt wird, wodurch es nicht mehr möglich ist, dass Teile des Bleches als Span aus der Nietwulst herausragen oder gar abgelöst werden können. Ferner soll diese Aufgabe mit verhältnismäßig einfachen Mitteln gelöst werden.

Um diese Aufgabe zu lösen, wird erfindungsgemäß ein Funktionselement mit einem Funktionsabschnitt, mit einem Kopfteil und mit einem im Allgemeinen rohrförmigen Nietabschnitt und einer ringförmigen Blechauflagefläche, wobei vorstehende Formmerkmale zur Mitnahme des Blechteils bei der Ausbildung des Nietbördels am rohrförmigen Nietabschnitt vorgesehen sind, am freien Stirnende des Nietabschnitts und/oder an der radial äußeren Seite des Nietabschnitts, mindestens im Bereich benachbart zum freien Stirnende des Nietabschnitts, wobei Vertiefungen im Kopfteil des Elements mit den vorstehenden Formmerkmalen winkelmäßig ausgerichtet sind, d.h. mit der gleichen Winkelteilung um die mittlere Längsachse des Funktionselements angeordnet sind, wobei die vorstehenden Formmerkmale t durch mindestens eines der nachfolgenden Merkmale gebildet sind:
a) sich axial am Nietabschnitt erstreckende Rippen, die sich mindestens von einem der Anlagefläche benachbarten Bereich bis mindestens kurz vor dem freien Stirnende des Nietabschnitts erstrecken, wobei die Rippen im Querschnitt eine gerundete Form aufweisen und beispielsweise bezogen auf die zylindrische Mantelfläche des Nietabschnitts eine zumindest im Wesentlichen halbkreisförmige Gestalt aufweisen, und
b) lokale Erhebungen am freien Stirnende des Nietabschnitts, wobei die lokalen Erhebungen in Draufsicht zumindest in etwa kreisförmig sind.

Durch solche Formmerkmale gelingt es, das Verfahren so zu gestalten - und ohne die Formgebung der verwendeten Matrizen von der gegenwärtigen Form abzuändern - dass das Blech bei dem Rollvorgang zur Ausbildung des Nietbördels mit dem Nietbördel mitbewegt wird und dadurch dafür zu sorgen, dass das Blech vom Nietabschnitt vollständig abgedeckt ist. Damit ist es nicht mehr möglich, dass Teile des Bleches als Span aus dem Nietwulst herausragen oder gar abgelöst werden.

Der Vollständigkeit halber soll auf die WO 2005/050034A, die US-A-2005/163590 und die US-A-2004/042870 verwiesen werden, die alle Funktionselemente zeigen jedoch nur solche mit einem Stanzabschnitt, nicht jedoch einen Nietabschnitt, so dass sie weder im Zusammenhang mit der hier gestellte Aufgabe noch deren Lösung stehen.

Es kommt eine Vielfalt von Formmerkmalen in Frage, die zur Lösung der Aufgabe beitragen können, darunter:
a) sich axial am Nietabschnitt erstreckende Rippen, die sich mindestens von einem der Anlagefläche benachbarten Bereich bis mindestens kurz vor dem freien Stirnende des Nietabschnitts erstrecken, und
b) lokale Erhebungen am freien Stirnende des Nietabschnitts.

Solche lokale Erhebungen sind vorzugsweise radial außerhalb einer im Allgemeinen konusförmigen oder gerundeten inneren Fläche des freien Stirnendes vorgesehen. Die oben genannten Merkmale können alleine oder in Kombination verwendet werden.

Auch sind andere Formgebungen denkbar, die die gleiche Wirkung haben können. Das erfindungsgemäße Funktionselement kann als selbst stanzendes Element realisiert werden, d.h., dass das freistehende Ende des Nietabschnitts zum Durchstanzen des Blechteils verwendet wird. Insbesondere kann das freie Stirnende des Nietabschnitts auf der radial inneren Seite eine sich in Richtung von der ringförmigen Anlagefläche weg divergierende Ringfläche, beispielsweise in Form einer konusförmigen Schneidfläche, und auf der radial äußeren Seite eine gerundete Ziehfläche aufweisen.

Die entsprechende Form kann entsprechend den oben angegebenen deutschen Patenten realisiert werden, und zwar entweder in einer Form wie in den oben genannten deutschen Patenten beschrieben oder entsprechend dem ebenfalls oben genannten europäischen Patent.

Besonders bevorzugte Ausführungsformen des erfindungsgemäßen Funktionselements sind den weiteren Unteransprüchen zu entnehmen.

Auch bei Realisierung des oben bezeichneten Merkmals c) bilden sich die Erhebungen am freien Stirnende des Stanz- und/oder Nietabschnitts im Blechteil ab und bieten ebenfalls eine erhöhte Verdrehsicherheit.

Die Erfindung wird nachfolgend näher erläutert anhand von Ausführungsbeispielen unter Bezugnahme auf die beigefügte Zeichnung, in welcher zeigen:
- Fig. 1A und 1B: zwei verschiedene Phasen der Anbringung eines herkömmlichen SBF-Bolzenelements an einem Blechteil, um die Problematik im Bereich des Nietbördels zu erläutern, wobei sowohl die Fig. 1A als auch die Fig. 1B eine vergrößerte Darstellung des Nietbördelbereiches umfassen,
- Fig. 2A und 2B: zwei Zeichnungen entsprechend den Fig. 1A und 1B, jedoch von einem erfindungsgemäßen Element, bei dem die erwünschte erfindungsgemäße Ausbildung im Bereich des Nietbördels eintritt, wobei das Element der Fig. 2A und 2B an der Außenseite erfindungsgemäß Rippen aufweist,
- Fig. 2C und 2D: Zeichnungen, die denen der Fig. 2A und 2B ähnlich sind, die aber die Verarbeitung eines Bolzenelements entsprechend der Fig. 2G darstellen,
- Fig. 2E bis 2O: verschiedene Ausbildungen des Nietabschnitts bzw. Stanz- und Nietabschnitts von Bolzenelementen, die alle mit Rippen an der äußeren Mantelfläche des Nietabschnitts versehen sind, wobei die Fig. 2E und 2J keine erfindungsgemäßen Ausführungen zeigen,
- Fig. 3A bis 3L: verschiedene Ausführungsformen von Bolzenlementen, die mit einer Ringwulst im Bereich des freien Endes des Nietabschnitts versehen sind, die aber nicht erfindungsgemäß ausgeführt sind,

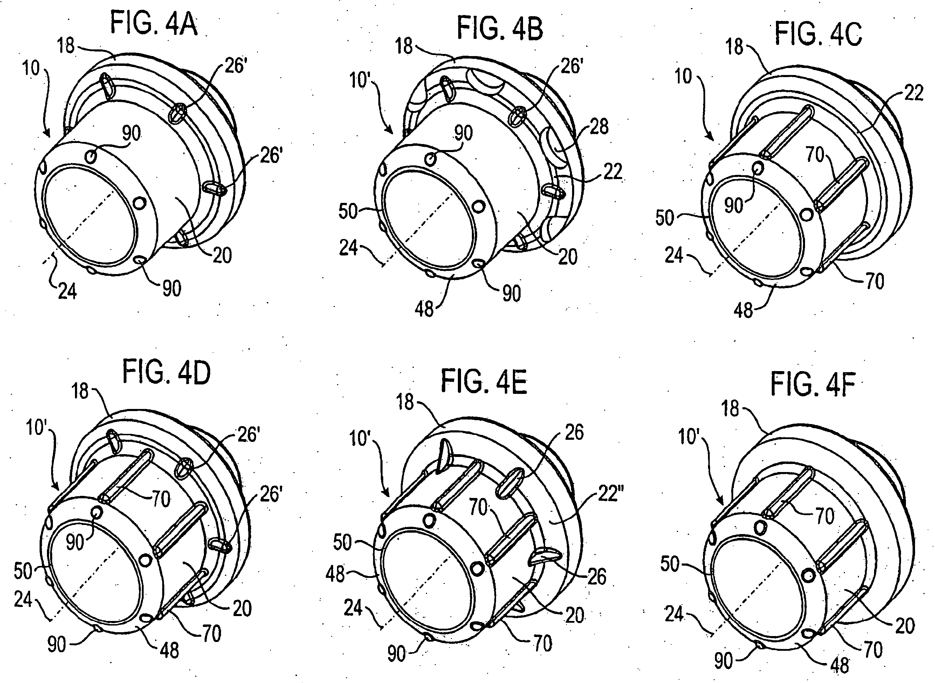

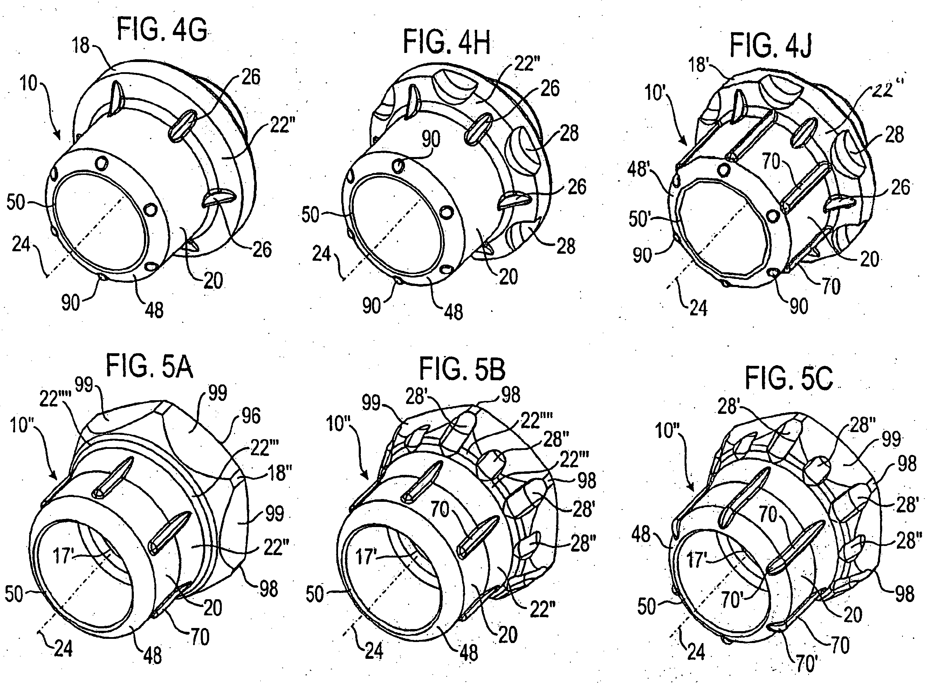

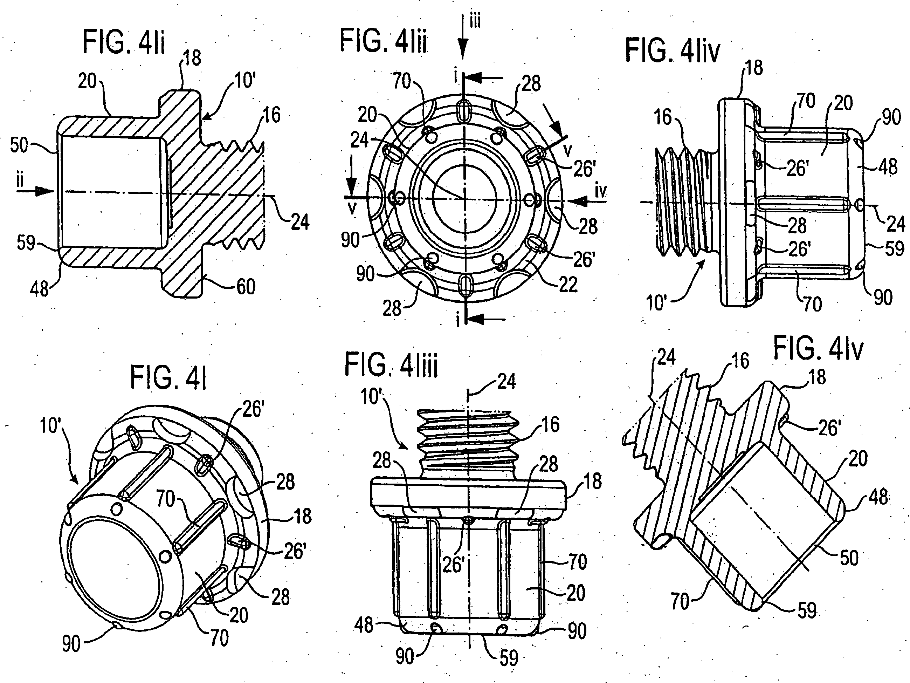

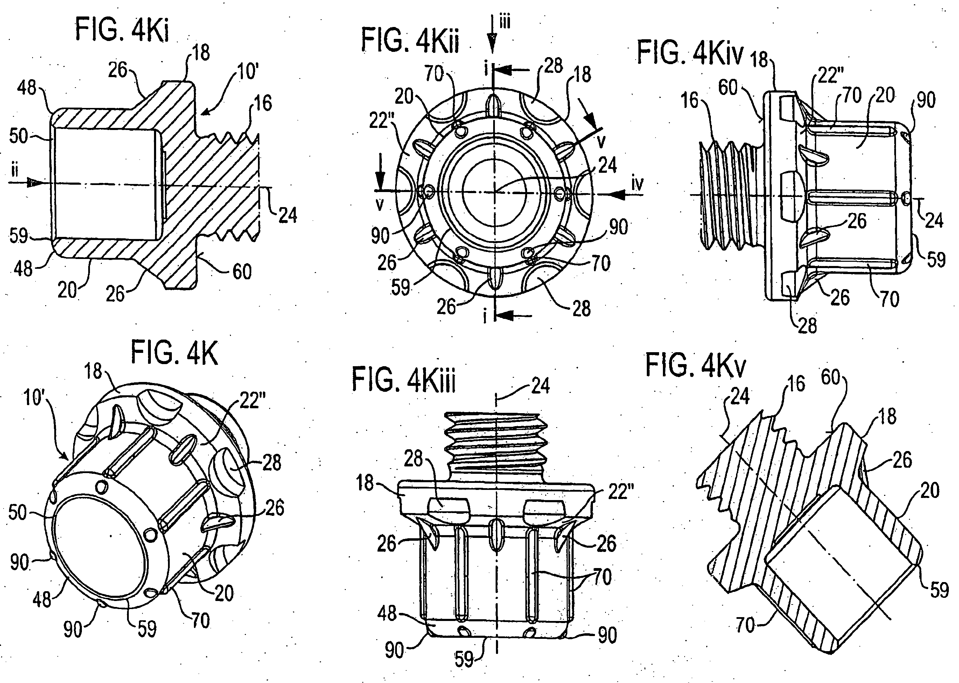

- Fig. 4A-K: verschiedene Ausführungsformen von Bolzenelementen, die mit lokalen Erhebungen am freien Stirnende des Nietabschnitts versehen sind, wobei die Figuren 4Ii bis 4Iv verschiedene Darstellungen des Elements gemäß Fig. 4I zeigen, und zwar in Fig. 4Ii einen Längsschnitt entsprechend der Schnittebene i-i der Fig. 4Iii, in Fig. 4Iii eine Stirnansicht auf das freie Ende des Nietabschnitts in Pfeilrichtung ii der Fig. 4Ii, Fig. 4Iiii eine Seitenansicht des Kopfteils des Elements entsprechend der Pfeilrichtung iii der Fig. 4Iii, Fig. 4Iiv eine Seitenansicht des Kopfteils des Elements entsprechend dem Pfeil iv der Fig. Fii und Fig. 4Iv einen Längsschnitt des Elements gemäß Fig. 4I entsprechend der Schnittebene v-v der Fig. 4Iii und die Fig. 4Ki bis 4Kv entsprechende Darstellungen zu den Fig. 4Ii bis 4Iv, jedoch vom Element 4K zeigen, wobei die Fig.4C und 4F keine erfindungsgemäßen Ausführungen zeigen,
- Fig. 5A-5C: perspektivische Darstellungen von drei Mutterelementen, die mit sich axial erstreckenden Rippen am Nietabschnitt versehen sind, wobei die Fig. 5A nicht erfindungsgemäß ausgeführt ist,
- Fig. 6A-6C: perspektivische Darstellungen von verschiedenen nicht erfindungsgemäßen Mutterelementen, die alle mit einer Ringwulst am freien Ende des Nietabschnitts versehen sind,
- Fig. 7A-C: Darstellungen von verschiedenen Ausführungsformen von Mutterelementen, die alle mit Erhebungen am freien Stirnende des Nietabschnitts versehen sind, wobei das Element gemäß Fig. 7B nicht erfindungsgemäß ausgeführt ist und für das Element der Fig. 7C die Figuren 7Ci bis 7Civ verschiedene Darstellungen analog zu den Darstellungen der Fig. 4Ii bis 4Iiv zeigen.

Bei allen nachfolgend erläuterten Beispielen werden für gleiche Merkmale bzw. gleiche Formmerkmale die gleichen Bezugszeichen verwendet, gegebenenfalls mit einem Strich oder Doppelstrich, wenn es darum geht, die eine Ausführung von der bisherigen Ausführung zu unterscheiden. Es versteht sich, dass alle Beschreibungen, die im Zusammenhang mit den einzelnen Merkmalen gegeben sind, egal ob die entsprechenden Bezugszeichen mit oder ohne Strich versehen sind, auch für alle anderen Formmerkmale bzw. Ausführungsbeispiele gelten, bei denen die gleichen Bezugszeichen zur Anwendung gelangen. So werden unnötig lange sich wiederholende Beschreibungen der einzelnen Merkmale vermieden.

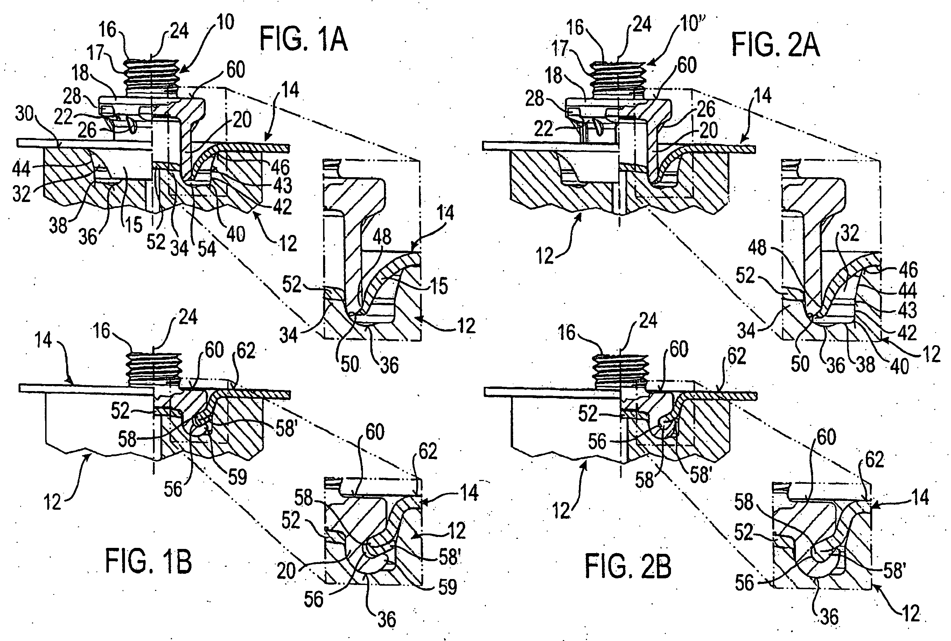

Bezug nehmend auf die Fig. 1A und 1B wird gezeigt, wie ein an sich bekanntes SBF-Bolzenelement entsprechend dem deutschen Patent DE 3447006 C2 mittels einer Matrize 12 selbststanzend in einem Blechteil 14 eingebracht wird. Das Bolzenelement 10 besteht aus einem Schaftteil 16 mit Gewinde 17 und einem Kopfteil 18 mit einem rohrförmigen Nietabschnitt 20 auf der dem Schaftteil 16 abgewandten Seite des Kopfteils, wobei der rohrförmige Nietabschnitt 20 in eine ringförmige Anlagefläche 22 des Kopfteils 18 übergeht und der Schaftteil 16, der Kopfteil 18 und der rohrförmige Nietabschnitt konzentrisch zur mittleren Längsachse 24 des Elements 10 angeordnet sind. Im Bereich der ringförmigen Blechauflagefläche 22 befinden sich Verdrehsicherungsnasen 26, in diesem Beispiel sechs an der Zahl, die schräg gestellt den Übergang vom rohrförmigen Nietabschnitt 20 in die ringförmige Auflagefläche 22 überbrücken.

Zwischen den Verdrehsicherungsnasen 26 befinden sich in der ringförmigen Auflagefläche 22 Vertiefungen 28, ebenfalls sechs an der Zahl, die sich jeweils zwischen zwei Verdrehsicherungsnasen 26 befinden und ebenfalls gleichmäßig um die mittlere Längsachse 24 des Elements 10 herum angeordnet sind. Man sieht aus der Darstellung der Fig. 1A, dass die ringförmige Auflagefläche 22 hier leicht konusförmig ist.

Die Matrize 12 hat an der freien Stirnseite 30, die das Blechteil 14 abstützt, eine ringförmige Vertiefung 32 mit einem mittleren zylindrischen Vorsprung 34, der über eine sanft gerundete radial nach außen führende so genannte Rollfläche 36 in die Bodenfläche 38 der Ringvertiefung 32 übergeht. Die Bodenfläche 38 geht wiederum über einen Radius 40 in einen zylindrischen Wandbereich 42 der Vertiefung 32 über. Dieser zylindrische Wandbereich 42 geht anschließend über eine leichte Rundung 43 in eine konusförmig in Richtung des Kopfteils 18 des Bolzenelements divergierende Wand 44 über, die anschließend über eine gerundete Kante 46 in die freie Stirnseite 30 der Matrize übergeht.

Die Verwendung der Matrize 12 mit einem selbst stanzenden Element in Form eines SBF-Bolzens, um den Nietbördel auszubilden, ist an sich bestens aus der Praxis sowie aus den oben angegebenen deutschen Patentschriften bekannt.

Im allgemeinen wird das freie Stirnende des rohrförmigen Nietabschnitts 20, das außen eine gerundete Ziehfläche 48 und innen eine, wenn auch kleine konusförmige Schneidfläche 50 aufweist, benutzt, um zunächst das Blechteil 14 im Bereich der ringförmigen Vertiefung 32 einzudellen und nach unten in einen Kragen 15 zu ziehen, bis das Blechteil auf das freie Stirnende des mittleren zylindrischen Pfostens 34 der Matrize trifft, wodurch der Stanzbutzen 52 aus dem Blechteil herausgetrennt wird. Dabei wird das freie Stirnende des rohrförmigen Nietabschnitts 20 durch das so entstandene Loch 54 im Blechteil hindurch geschoben und mittels der gerundeten Rollfläche 36 nach außen bis in die Position gerollt, die in Fig. 1B ersichtlich ist. Man sieht aus Fig. 1B, dass der rohrförmige Nietabschnitt durch die Zusammenarbeit mit der ringförmigen Rollfläche 36 zu einer U-förmigen Aufnahme 56 umgebördelt wird, in der der in sich selbst zurück gefaltete Kragenbereich 58 des Blechteils aufgenommen ist. Man sieht insbesondere aus der vergrößerten Darstellung unten rechts in Fig. 1B, dass sich ein Teil 58' des zurück gefalteten Kragenbereichs 58 des Blechteils außerhalb des umgebördelten freien Endes 59 des rohrförmigen Nietabschnitt befindet und dort einen im Prinzip ringförmigen Span bildet. In der Praxis erfolgt die Ausbildung oft so, dass der ringförmige umgeformte Endbereich 59 des rohrförmigen Nietabschnitts 20 tief in den zurück gefalteten Kragenbereich 58' eingedrückt wird, wodurch sich der zurück gefaltete Kragenbereich radial außerhalb des umgebördelten freien Stirnendes 59 des Nietabschnitts befindet und nur über einen kleinen Steg noch mit dem Blechteil 14 verbunden ist. Dies kann soweit gehen, dass der kleine Steg eingerissen ist oder dass das zurück gefaltete Blechteil radiale Einrisse aufweist, wodurch es möglich ist, dass sich bogenoder sichelförmige Bereiche des zurück gefalteten Kragens vom Blechteil ablösen und weiter in die Werkzeugen der für die Anbringung des Elements verwendeten Presse wandern.

Aus Fig.1B sieht man auch, dass der Stanzbutzen 52 aufgrund der Ausbildung des mittleren zylindrischen Pfostens 34 der Matrize fest innerhalb des rohrförmigen Nietabschnitts 20 eingeklemmt ist, und sogar verstemmt wird, so dass nach Entfernung des Zusammenbauteils, d.h. des Blechteils 14 mit dem daran genieteten Bolzenelement 10 aus der Presse bzw. aus der Matrize sich unverlierbar innerhalb des umgebördelten rohrförmigen Nietabschnitts befindet und sogar auch diesen Bereich des Zusammenbauteils versteift.

In der Praxis wird das Blechteil 14 üblicherweise mit einem Niederhalter des Setzkopfs (nicht gezeigt) gegen das freie Stirnende 30 der Matrize gedrückt, so dass das Blechteil in diesem Bereich plan bleibt. Man sieht auch aus Fig. 1B, dass die ringförmige Anschraubfläche 60 des Bolzenelements 10 mit der in Fig. 1B oberen Seite 62 des Blechteils fluchtet oder geringfügig gegenüber dieser zurückgesetzt ist. Dies hat den Vorteil, dass in der Anschraubsituation, in der ein weiteres Bauteil über dem Schaftteil des Bolzenelements angeordnet ist und mittels einer an dem Schaftteil angeschraubten Mutter am Zusammenbauteil (10 + 14) befestigt ist, plan auf dem Blechteil 14 bzw. der Anschraubfläche 60 des Bolzenelements sitzt.

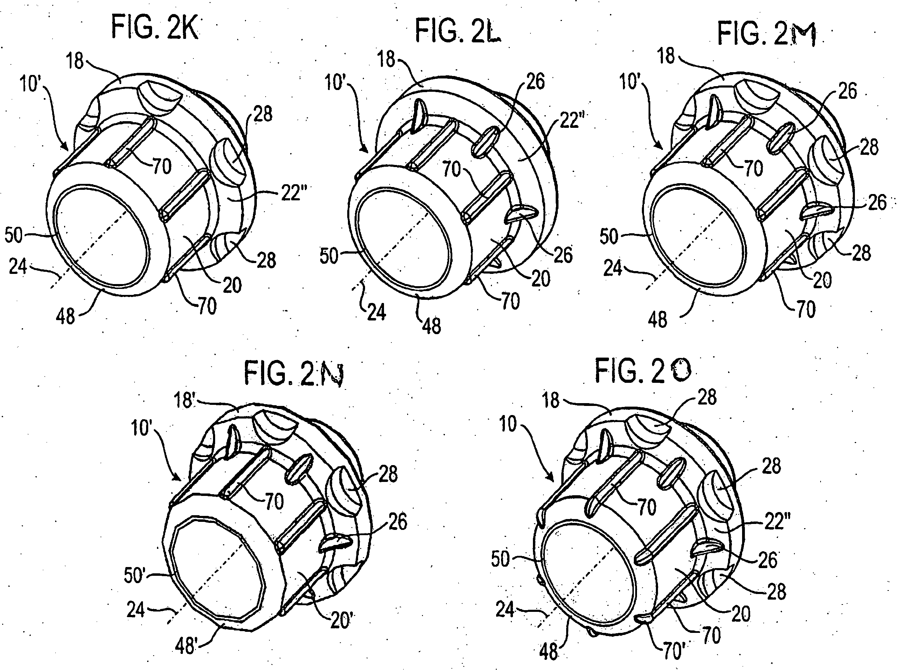

Die Figuren 2A und 2B zeigen nun wie unter Anwendung eines erfindungsgemäßen Bolzenelements 10' entsprechend der Fig. 2L der zurück gefaltete Bereich 58 bzw. 58' des Kragens 15 vollständig innerhalb der U-förmigen Aufnahme 56 zu liegen kommt, d.h. radial innerhalb des freien Endes 59 des umgebördelten rohrförmigen Nietabschnitts 20. Das Bolzenelement 10' entsprechend der Fig. 2M hat die gleichen Verdrehsicherungsnasen 26 und Verdrehsicherungsvertiefungen 28 wie das SBF-Element 10 der Fig. 1A und 1B, verfügt jedoch zusätzlich über an der Zahl sechs Längsrippen 70 von gerundeter Form an der Außenfläche des rohrförmigen Nietabschnitts, die sich in axialer Richtung erstrecken und mit den Vertiefungen 28 im Kopfteil des Elements winkelmäßig ausgerichtet sind, d.h. mit der gleichen Winkelteilung um die mittlere Längsachse 24 des Bolzenelements angeordnet sind.

Es hat sich herausgestellt, dass diese Formmerkmale in Form der längsgerichteten Rippen 70 sich bei der Ausbildung der Vertiefung im Kragenbereich 15 des Blechteils 14 in diesen eingraben und das Blechteil zwingen, so sozusagen schlupffrei mit dem rohrförmigen Nietabschnitt 20 bei dessen Umbördelung mitzubewegen, wodurch die erwünschte Ausbildung im Sinne des verkapselten zurück gefalteten Blechteils 58' des Kragenbereichs 15 erreicht wird.

Es ist nicht zwingend erforderlich, dass das Bolzenelement die Verdrehsicherungsrippen 26 und die Verdrehsicherungsvertiefungen 28 der Fig. 2L aufweist, einerseits deshalb nicht, weil die Längsrippen 70 ebenfalls eine Verdrehsicherung gegenüber dem Blechteil bilden und andererseits, weil bei manchen Anwendungen eine Verdrehsicherung entweder nicht nötig ist, beispielsweise wenn es sich bei dem Schaftteil 16 des Bolzenelements 10' um eine zylindrische Lagefläche ohne Gewinde handelt oder weil die Verdrehsicherung mit anderen Mitteln mit erreicht wird, beispielsweise durch einen Klebstoff, der an der ringförmigen Auflagefläche 22 und an der Außenfläche des rohrförmigen Nietabschnitts 20 vorgesehen ist, der unter Druck härtet und für eine verklebte Verbindung zwischen dem Kopfteil 2 des Elements und dem Blechteil sorgt.

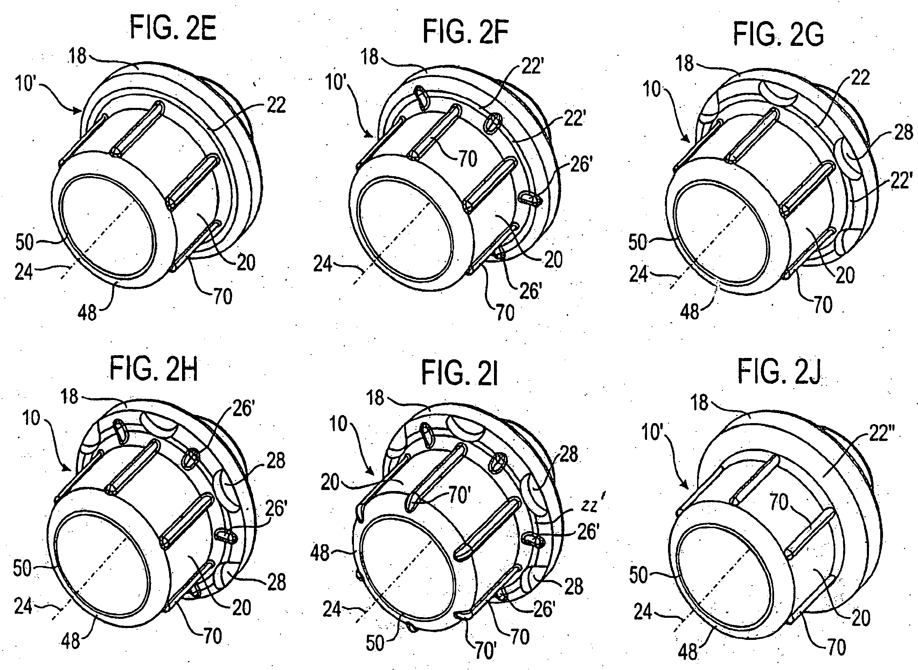

Die Figuren 2E bis 2K sowie 2M und 2N zeigen verschiedene Möglichkeiten, Funktionselemente in Bolzenform mit Längsrippen bzw. modifizierte Längsrippen wie 70 zu realisieren. An dieser Stelle sollte auch darauf hingewiesen werden, dass es sich bei den Elementen der Fig. 2E bis 2N anstelle von Bolzenelementen um Mutterelemente handeln könnte. Dann wäre im Kopfteil 14 des Elements axial oberhalb des rohrförmigen Nietabschnitts ein Innengewinde vorgesehen (hier nicht gezeigt).

Fig. 2E zeigt eine einfache Ausführungsform, bei der keine Verdrehsicherungsmerkmale, außer den sich in Axialrichtung erstreckenden Rippen 70 an der radial äußeren Fläche des rohrförmigen Nietabschnitts, vorgesehen sind.

Bei der Ausführungsform gemäß Fig. 2F werden die sechs Längsrippen 70 mit sechs Verdrehsicherungsnasen 26' ergänzt, die jeweils in der Mitte zwischen zwei benachbarten Längsrippen 70 angeordnet sind. Hier überbrücken die Verdrehsicherungsnasen 26' die ringförmige Auflagefläche 22 und unterteilen sie in sechs Bogenbereiche 22'.

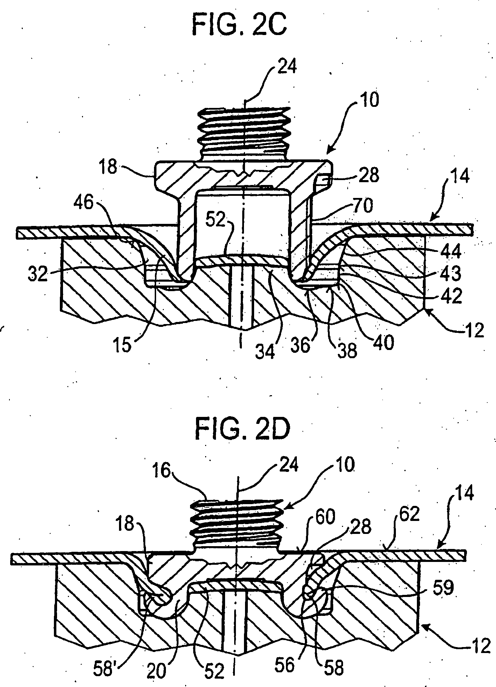

Bei der Ausführung gemäß Fig. 2G sind zusätzlich zu den in axiale Richtung gerichteten Rippen 70 Vertiefungen 28 im Kopfteil 18 des Bolzenelements 10 vorgesehen, die die ringförmige Auflagefläche 22 stellenweise unterbrechen. Die Figuren 2C und 2D zeigen wie ein Bolzenelement gemäß Fig. 2G erfindungsgemäß an ein Blechteil angebracht wird und sind den Fig. 2A und 2B sehr ähnlich. Man merkt aber auf der rechten Seite der Fig. 2D, dass die Blech-/Kopfteilverbindung im Bereich der Vertiefung 28 leicht anders ist als die Verbindung auf der linken Seite im Bereich zwischen zwei Vertiefungen 28 bzw. zwei Längsrippen 70. In beiden Bereichen befindet sich aber das zurück gefaltete Blechteil 58', d.h. der zurück gefalteten Bereich des Ringkragens 15, vollständig innerhalb der U-förmigen Aufnahme 56, die durch den umgebördelten Nietabschnitt 20 gebildet ist, d.h. das zurück gefaltete Teil 58' wird in allen Bereichen vom umgebördelten Nietabschnitt 20 sozusagen verkapselt.

Die Ausbildung gemäß Fig. 2H entspricht weitestgehend der Fig. 2G wird aber zusätzlich mit Verdrehsicherungsnasen 26' ergänzt, die so angeordnet sind, wie im Zusammenhang mit Fig. 2F gezeigt und beschrieben wird.

Bei der Ausführungsform gemäß Fig. 2I wird die Grundform der Ausbildung gemäß Fig. 2H beibehalten, nur werden die Längsrippen 70 an ihren Enden benachbart zum freien Stirnende des rohrförmigen Nietabschnitts 20 über die gerundete Fläche des freien Stirnendes des rohrförmigen Nietabschnitts 20 verlängert, d.h. durch den zusätzlichen Bereich 70' in Fig. 2I. Hierdurch wird sozusagen ein Funktionselement vorgesehen, das nicht nur sich axial am Nietabschnitt erstreckende Rippen, die sich mindestens von einem der Anlagefläche 22' benachbarten Bereich bis mindestens kurz vor das freie Stirnende 59 des Nietabschnitts erstrecken, sondern darüber hinaus verlängert, so dass sie lokale Erhebungen am freien Stirnende des Nietabschnitts im Bereich der gerundeten Ziehfläche 48 bilden, die radial außerhalb einer im Allgemeinen konusförmigen oder gerundeten inneren Fläche 50 des freien Stirnendes vorgesehen sind.

Bei der Ausführung gemäß Fig. 2J werden entsprechend der Ausführung gemäß Fig. 2E nur sich im axialen Nietabschnitt erstreckende Rippen 70 vorgesehen. Der Kopfteil 18 ist aber anders realisiert, und zwar dadurch, dass hier eine ausgeprägte konusförmige Auflagefläche 22" vorgesehen ist.

Bei der Ausbildung gemäß Fig. 2K werden die sich axial erstreckenden Rippen 70 am rohrförmigen Nietabschnitt in Fig. 2J durch Verdrehsicherungsvertiefungen 28 ergänzt, die in den gleichen radialen Ebenen wie die Längsrippen 70 angeordnet sind, d.h. die Verdrehsicherungsvertiefungen 28 sind in radialer Richtung mit den sich axial erstreckenden Rippen ausgerichtet, und so angeordnet, dass sie die konusförmige Auflagefläche 22" stellenweise unterbrechen.

Bei der Ausführungsform gemäß Fig. 2L wird die Ausführung gemäß Fig. 2J dadurch weitergebildet, dass Verdrehsicherungsnasen 26 am Kopfteil vorgesehen sind, die den Übergang zwischen dem rohrförmigen Nietabschnitt und der konusförmigen Blechauflagefläche 22" überbrücken. Die Verdrehsicherungsnasen 26 sind hier winkelmäßig jeweils in der Mitte zwischen zwei benachbarten, sich axial erstreckenden Rippen 70 angeordnet.

In Fig. 2M ist die Ausführung gemäß Fig. 2L durch Vertiefungen wie in Fig. 2K ergänzt worden.

Die Ausführung gemäß Fig. 2N entspricht im Wesentlichen der der Fig. 2M, nur wird in diesem Beispiel ein rohrförmigen Nietabschnitt mit polygonalen Querschnitt, genauer gesagt mit zwölf Seiten 20' verwendet, wobei auch der innere Hohlraum des Nietabschnitts 20' von polygonaler Gestalt mit ebenfalls zwölf Seiten ausgebildet ist. Hier sind die Längsrippen 18 an jeder zweiten Ecke angeordnet, die durch jeweils zwei aneinander grenzende Seitenflächen des rohrförmigen Nietabschnitts 20' gebildet sind. Auch der Kopfteil 18' ist von polygonaler Form mit ebenfalls zwölf Seitenflächen.

Schließlich zeigt die Fig. 2O eine Ausführungsform ähnlich der Fig. 2M mit Verdrehsicherungsnasen 26 und Verdrehsicherungsvertiefungen 28, bei der jedoch die sich axial erstreckenden Rippen 70 am Nietabschnitt 20 entsprechend der Ausbildung gemäß Fig. 2I sich ebenfalls über die gerundete Fläche 48 am freien Stirnende 59 des rohrförmigen Nietabschnitts 20 weitergeführt werden und dort Erhebungen 70' entsprechend der Fig. 2I bilden.

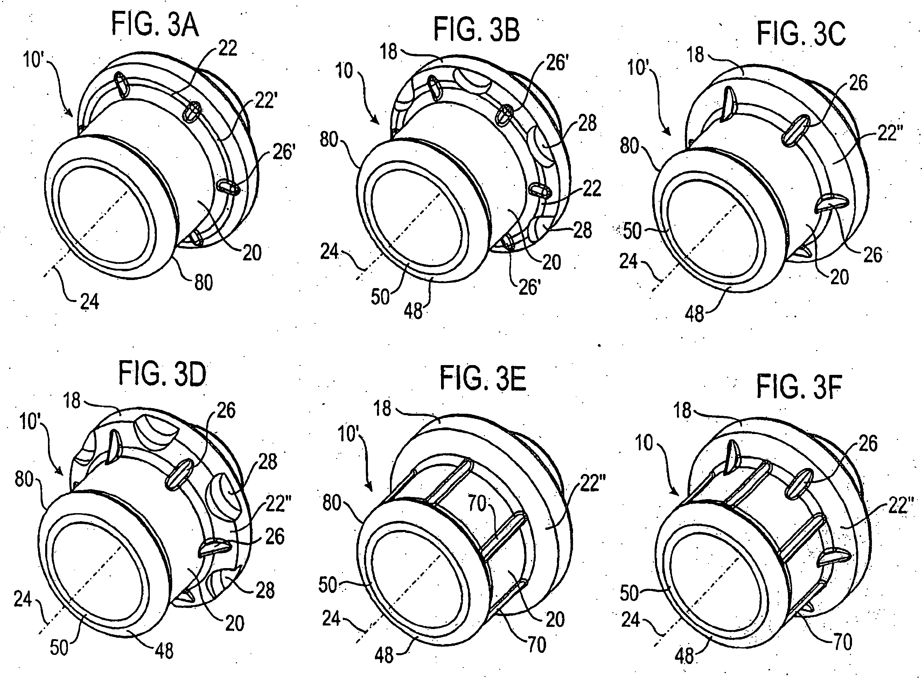

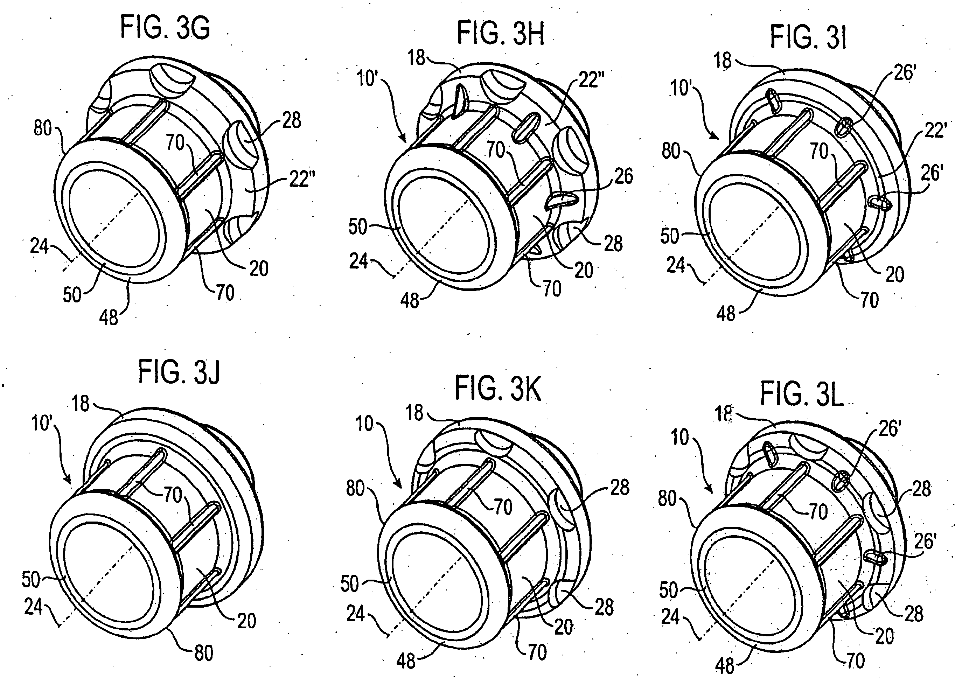

Die Figuren 3A bis 3L zeigen nicht erfindungsgemäßen Ausführungen von Bolzenelementen, die ein gemeinsames Merkmal aufweisen, und zwar in Form eines am freien Stirnende des rohrförmigen Nietabschnitts vorgesehenen, radial nach außen über die äußere zylindrische Fläche des rohrförmigen Nietabschnitts herausragenden Wulstes 80.

An dieser Stelle sollte auch darauf hingewiesen werden, dass es sich bei den Elementen der Fig. 3A bis 3L anstelle von Bolzenelementen um Mutterelemente handeln könnte. Dann wäre im Kopfteil 14 des Elements axial oberhalb des rohrförmigen Nietabschnitts ein Innengewinde vorgesehen (hier nicht gezeigt).

Die Ausführungsform der Fig. 4A bis Fig. 4K haben als gemeinsames Merkmal die lokalen Erhebungen 90 am freien Stirnende 59 des rohrförmigen Nietabschnitts 20, genauer gesagt an der gerundeten Ziehfläche 48.

An dieser Stelle sollte auch darauf hingewiesen werden, dass es sich bei den Elementen der Fig. 4A bis 4K anstelle von Bolzenelementen um Mutterelemente handeln könnte. Dann wäre im Kopfteil 14 des Elements axial oberhalb des rohrförmigen Nietabschnitts ein Innengewinde vorgesehen (hier nicht gezeigt).

Bei der Ausführung gemäß Fig. 4A kommt die Kopfform mit der schmalen konusförmigen ringförmigen Auflagefläche 22 ähnlich der Ausführung der Fig. 2F zur Anwendung, nur werden aber die Längsrippen 70 der Fig. 2F durch die Erhebungen 90 ersetzt.

Bei der Ausführung gemäß Fig. 4B kommen zusätzlich zu den Verdrehsicherungsnasen 26' der Fig. 4A auch die Verdrehsicherungsvertiefungen 28 zur Anwendung, die in radialen Ebenen mit den lokalen Erhebungen 90 ausgerichtet und jeweils in der Mitte zwischen zwei benachbarten Verdrehsicherungsnasen 26' angeordnet sind.

Bei der Ausführung gemäß Fig. 4C ist die Grundausbildung ähnlich der der Fig. 4A, nur werden hier die Verdrehsicherungsnasen 26' weggelassen und die lokalen Erhebungen 90 am freien Stirnende des Nietabschnitts werden gleichzeitig mit sich in axialer Richtung erstreckenden Längsrippen 70 am rohrförmigen Nietabschnitt verwendet, die mit den lokalen Erhebungen in radialen Ebenen ausgerichtet sind.

Bei Fig. 4D kommen sowohl die Verdrehsicherungsnasen 26' der Fig. 4A als auch die sich axialer Richtung erstreckenden Längsrippen 70 am rohrförmigen Nietabschnitt 20 zur Anwendung.

Bei Fig. 4E wird dann die Grundform des Bolzenelements 10' mit einer ausgeprägten konusförmigen Auflagefläche 22" verwendet, wobei hier Längsrippen 70 und Verdrehsicherungsnasen 26, die den Übergang vom rohrförmigen Nietabschnitt 20 in die konusförmige ringförmige Auflagefläche 22" überbrücken, zur Anwendung kommen. Auch hier sind die Verdrehsicherungsnasen 26 um eine halbe Teilung gegenüber den lokalen Erhebungen 90 an dem freien Stirnende des Nietabschnitt versetzt angeordnet, während die Längsrippen 70 mit diesen ausgerichtet sind.

Bei Fig. 4F wird die gleiche Grundausführung des Bolzenelements wie bei Fig. 4E bzw. 2J verwendet, wobei anstelle der Verdrehsicherungsnasen 26 der Fig. 4E nur die sich axial erstreckenden Längsrippen 70 am rohrförmigen Nietabschnitt 20 verwendet werden.

Bei der Ausführung gemäß Fig. 4G wird die Ausführung gemäß Fig. 4E verwendet, jedoch ohne die sich in Längsrichtung erstreckenden Rippen 70.

Bei der Ausführung gemäß Fig. 4H wird eine Ausführung ähnlich der Fig. 4GF verwendet, jedoch zusätzlich mit Verdrehsicherungsvertiefungen 28 versehen, die die konusförmige Auflagefläche 22" unterbrechen, wobei die Vertiefungen 28 in den gleichen radialen Ebenen angeordnet sind wie die Erhebungen 90 am freien Stirnende 59 des rohrförmigen Nietabschnitts 20.

Die Ausführungsform gemäß Fig. 4I entspricht im Wesentlichen der der Fig. 4B, wird jedoch zusätzlich mit sich in axialer Richtung am rohrförmigen Nietabschnitt erstreckenden Längsrippen 70 ergänzt. Die Ausführung gemäß Fig. 4J ist ähnlich der der Fig. 4K, nur hier kommt die polygonale Grundform des rohrförmigen Nietabschnitts entsprechend der Fig. 2N zur Anwendung.

Die genaue Ausbildung der Ausführungsform gemäß Fig. 4K geht aus den Figuren 4Ki bis 4Kv hervor, sie entspricht im Wesentlichen der Ausführung gemäß Fig. 4B, ist aber zusätzlich mit den Längsrippen 70 ergänzt worden, die in den gleichen radialen Ebenen liegen wie die Erhebungen 90 und die Vertiefungen 28.

Die Fig. 5A bis 5C zeigen Mutterelemente 10", die alle gemeinsam sich axial erstreckende Längsrippen 70 am rohrförmigen Nietabschnitt aufweisen. Bei Fig. 5A werden diese Längsrippen 70 im Prinzip ohne zusätzliche Verdrehsicherungsmerkmale verwendet, wenn man von der polygonalen Außenform 96 des Kopfteils 18" des Mutterelements absieht, die bei entsprechender Anbringung am Blechteil, d.h. bei einer Versenkung des Kopfteils innerhalb des Blechteils, ebenfalls für eine gewisse Verdrehsicherung gegenüber dem Blechteil sorgen.

Man sieht hier, dass das Mutterelement eine ausgeprägte konusförmige Fläche 22" aufweist und dass die dem Kopfteil des Elements zugewandten Enden der Längsrippen 70 auf diese konusförmige Fläche auflaufen und dort zu Ende gehen. Radial außerhalb der ausgeprägten konusförmigen Fläche befinden sich zwei weitere ringförmige und konusförmige Auflageflächen 22'" und 22"", die aber im Vergleich zur konusförmigen Fläche 22" relativ schmal sind. Diese Flächen werden in diesem Beispiel der Fig. 5A nicht von Verdrehsicherungsmerkmalen unterbrochen.

Dagegen werden bei der Ausführungsform gemäß Fig. 5B Vertiefungen 28' bzw. 28" vorgesehen. Dabei sind die längeren Vertiefungen 28', die in den gleichen radialen Ebenen wie die Längsrippen 70 angeordnet sind und welche zumindest teilweise die Kanten 98 zwischen den Seitenflächen 99 des polygonalen Kopfteils 18" unterbrechen, so angeordnet, dass sie die zwei schmalen konusförmigen Flächen unterbrechen, sich jedoch nicht in die breite konusförmige Fläche hinein erstrecken.

Die kurzen Vertiefungen 28", die zwischen den längeren Vertiefungen 28' angeordnet sind und teilweise die Seitenflächen 99 des polygonalen Kopfteils des Elements unterbrechen, unterbrechen ebenfalls die zwei schmalen konusförmigen Auflagerflächen 22"', 22"", jedoch nicht die breite konusförmige Auflagefläche 22".

Bei der Ausführungsform gemäß Fig. 5C werden die sich axial erstreckenden Längsrippen 70 am rohrförmigen Nietabschnitt verlängert entsprechend den Verlängerungen 70' der Fig. 2I, so dass die Verlängerungen 70' Erhebungen an der gerundeten Ziehfläche 48 des freien Stirnendes des rohrförmigen Nietabschnitts 20 bilden.

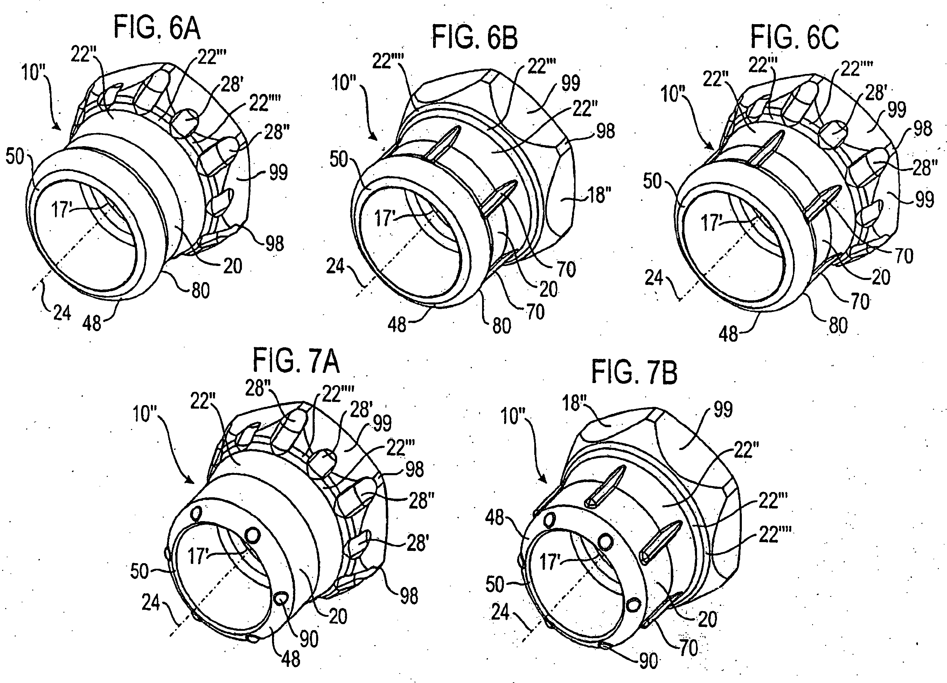

Die Fig. 6A bis 6C zeigen wiederum nicht erfindungsgemäße Mutterelemente, mit der Grundausbildung eines ringförmigen Wulstes 80 am freien Stirnende des rohrförmigen Nietabschnitts 20. Die Grundform des Mutterelements entspricht abgesehen von der Ringwulst den Grundformen der Fig. 5A-5C-Ausführungen.

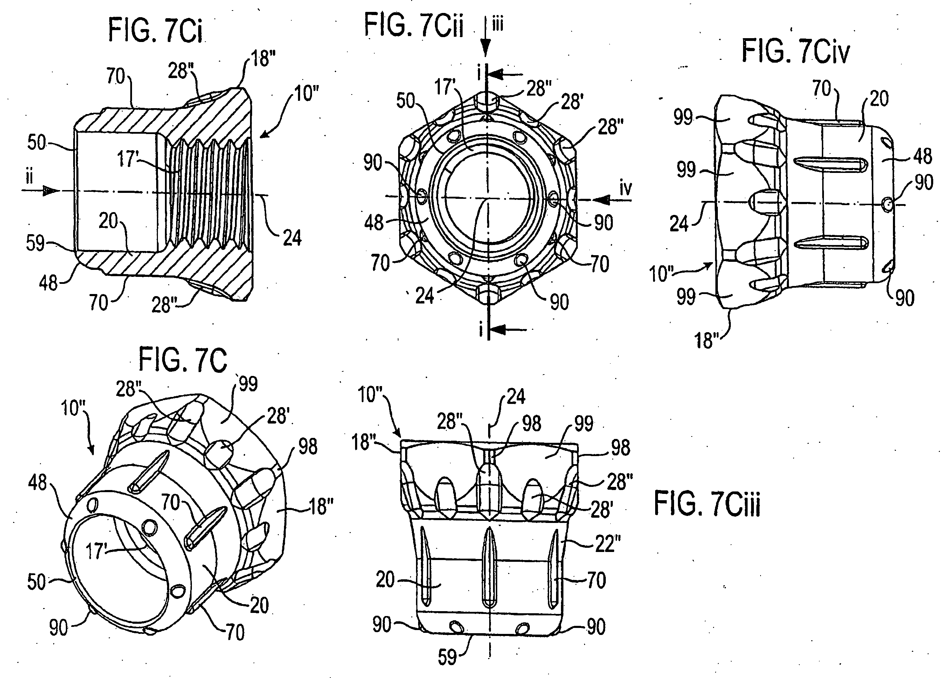

Schließlich zeigen Fig. 7A bis 7C wiederum Mutterelemente 10" mit der gleichen Grundform wie die Fig. 5A bis 5C bzw. 6A bis 6C, jedoch hier mit dem gemeinsamen Merkmal von diskreten Erhebungen 90 am freien Stirnende des rohrförmigen Nietabschnitts 20, genauer gesagt an der gerundeten Ziehfläche 48 des freien Stirnendes des rohrförmigen Nietabschnitts. Hier wie bei den anderen gezeigten Ausführungsbeispielen haben die diskreten lokalen Erhebungen 90 in Draufsicht eine Kreisform, was aber nicht zwingend erforderlich ist, beispielsweise könnten lang gestreckte ovale Erhebungen oder in Draufsicht sternförmige oder polygonale Erhebungen verwendet werden.

Bei der Ausführung gemäß Fig. 7A werden die lokalen Erhebungen in Kombination mit sich abwechselnden längeren und kürzeren Verdrehsicherungsvertiefungen 28', 28" am Kopfteil des Elements verwendet, die genauso ausgebildet sind wie bei den Ausführungsbeispielen gemäß Fig. 5B bzw. 6A.

Bei der Ausführung gemäß Fig. 7B werden dann aber die sich abwechselnden Verdrehsicherungsvertiefungen 28', 28" nicht vorgesehen, stattdessen kommen sich in axiale Richtung erstreckende Längsrippen 70 am rohrförmigen Nietabschnitt zur Anwendung, die in ihrer Form denen der Fig. 5A genau entsprechen.

Schließlich zeigt Fig. 7C wie auch die detaillierte Darstellung gemäß Fig. 7Ci bis 7Civ ein Ausführungsbeispiel entsprechend der Fig. 7B, jedoch in Kombination mit sich abwechselnden Verdrehsicherungsvertiefungen 28', 28" am Kopfteil des Elements 10".

Bei allen Ausführungsbeispielen werden Formmerkmale, die Erhebungen darstellen, wie beispielsweise die sich in Längsrichtung erstreckenden Rippen 70, deren Verlängerungen 70' oder die Erhebungen 90, am freien Stirnende des rohrförmigen Nietabschnitts mit sanft gerundeten Konturen vorgesehen, um eine unnötige Verletzung des Blechteils zu vermeiden.

Wenn erfindungsgemäß Vertiefungen wie 28, 28' oder 28" zur Anwendung gelangen, so können diese scharfkantig in die äußere Mantelfläche des jeweiligen Elements übergehen, doch sollten die Grundbereiche der Vertiefungen gerundet sein, obwohl in vielen Fällen das Blechmaterial dort nicht zum Anliegen kommt, weil das Blechmaterial die entsprechenden Vertiefungen nicht vollständig ausfüllt.

Obwohl in allen gezeigten Ausführungsformen stets sechs Formmerkmale wie 70, 90, 26, 26', 28, 28' 28" gezeigt sind, ist dies zwar vernünftig aber keinesfalls als einschränkend zu betrachten. Stattdessen könnten weniger oder mehrere solche Formmerkmale vorgesehen werden, die üblicherweise aber nicht zwangsläufig gleichmäßig um die mittlere Längsachse herum verteilt werden sollen.

Ferner soll zum Ausdruck gebracht werden, dass die vorliegende Erfindung auch bei anderen Funktionselementen verwendet werden können, die mit einem rohrförmigen Nietabschnitt versehen sind, beispielsweise bei Elementen mit einer Unterkopfausbildung wie das RND-Element der Firma Profil Verbindungstechnik GmbH & Co. KG oder mit einem Nietabschnitt entsprechend dem Rockmutter- oder Rockbolzenelement der gleichen Firma.

Insbesondere könnte das Funktionselement eine ringförmige Anlagefläche mit mindestens einem ringförmigen Bereich aufweisen, der in einer radialen Ebene senkrecht zur mittleren Längsachse des Funktionselements liegt.

Ferner könnte radial innerhalb eines ringförmigen Bereiches der ringförmigen Auflagefläche, der in einer radialen Ebene senkrecht zur mittleren Längsachse liegt, eine ringförmige Nut vorgesehen werden, die sich um den Nietabschnitt herum erstreckt und gegebenenfalls einen Teil der Anlagefläche bildet. Bei dieser Ausführung könnte die ringförmige Nut auf der radial äußeren Seite eine zur mittleren Längsachse schräg gestellte Fläche aufweisen, d.h. die Nut wäre im Querschnitt zumindest in etwa V-förmig.

Auch könnten sich in radialer Richtung erstreckende Verdrehsicherungsrippen in der ringförmigen Nut vorgesehen werden und diese teilweise oder vollständig überbrücken.

Denkbar wäre es auch, dass Aussparungen, die die radiale äußere Seite der ringförmigen Nut und den ringförmigen Bereich der Auflagefläche unterbrechen, zwischen den Verdrehsicheningsrippen vorgesehen sind.

Es könnte ferner ein Funktionselement vorgesehen werden, das sich dadurch kennzeichnet, dass ein die ringförmige Auflagefläche aufweisender Kopfabschnitt vorgesehen ist, dass der Schaftteil des Bolzenelements auf der gleichen Seite des Kopfteils wie die ringförmige Auflagefläche angeordnet ist und von diesen wegsteht, und dass der rohrförmige Nietabschnitt radial innerhalb der ringförmigen Auflagefläche und radial außerhalb des Schaftteils vorgesehen ist.

Es könnte auch ein Mutterelement vorgesehen werden, das sich dadurch auszeichnet, dass ein die ringförmige Auflagefläche aufweisender Kopfabschnitt vorgesehen ist, der in einen rohrförmigen, hohlen, vom Kopfabschnitt auf der Seite der Auflagefläche wegstehenden Schaftteil übergeht, der vom rohrförmigen Nietabschnitt umgeben ist, wobei das freie Stirnende des Schaftteils von der ringförmigen Auflagefläche weiter entfernt ist als das freie Stirnende des Nietabschnitts.

Hier könnte das freie Stirnende des Schaftteils zum Durchstanzen eines Blechteils ausgelegt sein.

Bei einem solchen Element könnte ein Gewinde im Kopfabschnitt sowie im dem Kopfabschnitt benachbarten Bereich des Schaftteils vorgesehen werden.
Wen eine konusförmige Anlagefläche vorgesehen ist, so könnte das Element entsprechend der EP-Anmeldung 02730181.1 oder der WO 03/089187 ausgelegt und angebracht werden.

Bei allen Ausführungsförmen können als Beispiel für den Werkstoff des Profils und der daraus hergestellten Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstöffe für ziehfähige Blechteile wie auch für Aluminium oder dessen Legierungen. Auch können Aluminiumlegierungen, insbesondere solche mit hoher Festigkeit, für das Profil bzw. die Funktionselemente benutzt werden, z.B. AlMg5. Auch kommen Profile bzw. Funktionselemente aus höherfesten Magnesiumlegierungen wie beispielsweise AM50 in Frage.

## Patentansprüche

1. Funktionselement (10'; 10") mit einem Funktionsabschnitt (16, 17; 17'), mit einem Kopfteil und mit einem im Allgemeinen rohrförmigen Nietabschnitt und einer ringförmigen Blechauflagefläche (22; 22'; 22"; 22", 22"', 22""), wobei vorstehende Formmerkmale (70; 70, 70'; 90; 90, 70) zur Mitnahme des Blechteils (14) bei der Ausbildung des Nietbördels am rohrförmigen Nietabschnitt (20) vorgesehen sind, am freien Stirnende (59) des Nietabschnitts und/oder an der radial äußeren Seite des Nietabschnitts (20), mindestens im Bereich benachbart zum freien Stirnende (59) des Nietabschnitts (20), wobei Vertiefungen (28) im Kopfteil des Elements mit den vorstehenden Formmerkmalen (70; 70, 70'; 90; 90, 70) winkelmäßig ausgerichtet sind, d.h. mit der gleichen Winkelteilung um die mittlere Längsachse (24) des Funktionselements angeordnet sind, wobei die vorstehenden Formmerkmale durch mindestens eines der nachfolgenden Merkmale gebildet sind:
a) sich axial am Nietabschnitt erstreckende Rippen (70; 70, 70'), die sich mindestens von einem der Anlagefläche (22; 22'; 22"; 22", 22'", 22"") benachbarten Bereich bis mindestens kurz vor dem freien Stirnende (59) des Nietabschnitts (20) erstrecken, wobei die Rippen (70) im Querschnitt eine gerundete Form aufweisen und bezogen auf die zylindrische Mantelfläche des Nietabschnitts (20) eine zumindest im Wesentlichen halbkreisförmige Gestalt aufweisen, und
b) lokale Erhebungen (70'; 90) am freien Stirnende (59) des Nietabschnitts (20), wobei die lokalen Erhebungen (90) in Draufsicht zumindest in etwa kreisförmig sind.

2. Funktionselement nach Anspruch 1, wobei es sich um ein selbststanzendes Element (10'; 10") handelt, d.h. dass das freie Stirnende (59) des Nietabschnitts (20) zum Durchstanzen eines Blechteils ausgelegt ist.

3. Funktionselement nach einem der vorhergehenden Ansprüche, wobei das freie Stirnende (59) des Nietabschnitts (20) auf der radial inneren Seite eine sich in Richtung von der ringförmigen Anlagefläche weg divergierende Ringfläche (50), beispielsweise in Form einer konusförmigen Schneidfläche, und auf der radial äußeren Seite eine gerundete Ziehfläche (48) aufweist.

4. Funktionselement nach einem der vorhergehenden Ansprüche, bei dem die Merkmale a) und b) vorhanden sind, wobei die Erhebungen (70', 90) am freien Stirnende (59) des Nietabschnitts (20) mit den sich axial erstreckenden Rippen (70) fluchten, d.h. jeweils in der gleichen axialen Ebene liegen.

5. Funktionselement nach einem der vorhergehenden Ansprüche bei dem das Merkmale a) vorhanden ist und Erhebungen (70') an dem freien Stirnende (59) des Nietabschnitts (20) vorgesehen sind, die durch die stirnseitigen Enden der sich radial erstreckenden Rippen (70) gebildet sind, die am freien Stirnende (59) auslaufen.

6. Funktionselement nach einem der vorhergehenden Ansprüche, wobei die sich axial erstreckenden Rippen (70) gemäß Merkmal a) und/oder die Erhebungen (70'; 90)gemäß Merkmal b) um die mittlere Längsachse (24) des Funktionselements (10'; 10") gleichmäßig verteilt sind.

7. Funktionselement nach einem der vorhergehenden Ansprüche, wobei die Zahl der Rippen (70) und/oder der Erhebungen (70'; 90) zwischen 3 und 24 liegt.

8. Funktionselement nach einem der vorhergehenden Ansprüche, wobei die Vertiefungen (28) durch in Draufsicht etwa halbkreisförmige Aussparungen in einem Kopfteil (18; 18'; 18") bzw. Flanschbereich des Funktionselements (10'; 10") gebildet sind, die radial in die ringförmige Anlagefläche (22; 22'; 22"; 22", 22"', 22"") hineinragen, in der Richtung radial nach außen offen sind und ihre größten Querabmessungen an der radial äußeren Fläche des Kopfteils (18; 18'; 18") aufweisen.

9. Funktionselement nach einem der vorhergehenden Ansprüche, wobei die ringförmige Anlagefläche (22; 22'; 22"; 22", 22"', 22""), abgesehen von etwaigen Verdrehsicherungsnasen (26; 26'; 28; 28, 28', 28") und/oder Vertiefungen (28), eine konusförmige Fläche ist.

10. Funktionselement nach einem der vorhergehenden Ansprüche 1 bis 8, wobei die ringförmige Anlagefläche mindestens einen ringförmigen Bereich aufweist, der an einer radialen Ebene senkrecht zur mittleren Längsachse (24) des Funktionselements liegt.

11. Funktionselement nach einem der vorhergehenden Ansprüche 1 bis 8, wobei radial innerhalb eines ringförmigen Bereiches der ringförmigen Auflagefläche, der in einer radialen Ebene senkrecht zur mittleren Längsachse liegt, eine ringförmige Nut vorgesehen ist, die sich um den Nietabschnitt (20) herum erstreckt.

12. Funktionselement nach Anspruch 11, wobei die ringförmige Nut auf der radial äußeren Seite eine zur mittleren Längsachse schräg gestellte Fläche aufweist, d.h. die Nut im Querschnitt zumindest in etwa V-förmig ist.

13. Funktionselement nach Anspruch 11, wobei sich in radialer Richtung erstreckende Verdrehsicherungsrippen in der ringförmigen Nut vorgesehen sind und diese teilweise oder vollständig überbrücken.

14. Funktionselement nach Anspruch 13, wobei Aussparungen, die die radiale äußere Seite der ringförmigen Nut und den ringförmigen Bereich der Auflagerfläche unterbrechen, zwischen den Verdrehsicherungsrippen vorgesehen sind.

15. Funktionselement nach einem der vorhergehenden Ansprüche, wobei es sich um ein Bolzenelement (10') mit einem Schaftteil (16) handelt.

16. Funktionselement nach Anspruch 15, wobei ein Kopfteil (18; 18') vorgesehen ist, wobei der rohrförmige Nietabschnitt (20) auf der einen Seite des Kopfteils (18; 18') und der Schaftteil (16) auf der anderen Seite des Kopfteils (18; 18') vorgesehen sind und die ringförmige Auflagefläche (22; 22'; 22") auf der dem Nietabschnitt (20) zugewandten Seite des Bolzenelements (10') vorgesehen ist.

17. Funktionselement nach Anspruch 16, wobei ein die ringförmige Auflagefläche aufweisender Kopfabschnitt vorgesehen ist, der Schaftteil des Bolzenelements auf der gleichen Seite des Kopfteils wie die ringförmige Auflagefläche angeordnet ist und von diesen wegsteht, und der rohrförmige Nietabschnitt (20) radial innerhalb der ringförmigen Auflagefläche und radial außerhalb des Schaftteils vorgesehen ist.

18. Funktionselement nach einem der vorhergehenden Ansprüche 1 bis 14, wobei es sich um ein Mutterelement (10") handelt.

19. Funktionselement nach Anspruch 18, wobei ein die ringförmig Auflagefläche aufweisender Kopfabschnitt vorgesehen ist, der in einen rohrförmigen, hohlen, vom Kopfabschnitt auf der Seite der Auflagefläche wegstehenden Schaftteil übergeht, der vom rohrförmigen Nietabschnitt (20) umgeben ist, wobei das freie Stirnende (59) des Schaftteils von der ringförmigen Auflagefläche weiter entfernt ist als das freie Stirnende (59) des Nietabschnitts (20).

20. Funktionselement nach Anspruch 19, wobei das freie Stirnende (59) des Schaftteils zum Durchstanzen eines Blechteils ausgelegt ist.

21. Funktionselement nach Anspruch 20, wobei ein Gewinde im Kopfabschnitt sowie im dem Kopfabschnitt benachbarten Bereich des Schaftteils vorgesehen ist.

22. Funktionselement nach einem der vorhergehenden Ansprüche in Kombination mit einem Blechteil, wobei das Blechteil (58') einen Kragenbereich (15) aufweist, wobei der Nietabschnitt (20) durch den Kragenbereich hindurch erstreckt und bei dem Rollvorgang zur Ausbildung des Nietbördels der Kragenbereich (15) in sich zurückgefaltet ist und innerhalb einer U-förmigen Aufnahme (56) zu liegen kommt, die bei der Ausbildung des Nietbördels entsteht, wodurch die erwünschte Ausbildung des verkapselten zurückgefalteten Blechteils (58') des Kragenbereichs (15) erreicht ist.

## Claims

1. A functional element (10'; 10") having a functional portion (16; 17; 17'), having a head part and having a generally tubular rivet portion and a ring-like sheet metal contact surface (22; 22'; 22"; 22", 22"', 22""), wherein projecting features of shape (70; 70, 70'; 80; 80, 70; 90; 90, 70) are provided at the tubular rivet portion (20) for co-movement of the sheet metal part (14) during the formation of the rivet bead, at the free end (59) of the rivet portion and/or at the radially outer side of the rivet portion (20), at least in the region adjacent the free end (59) of the rivet portion (20) wherein cut-outs (28) in the head part of the element are aligned in an angular manner with the projecting features of shape (70; 70, 70'; 90; 90, 70), i.e. are arranged with the same angular division about the central longitudinal axis (24) of the functional element, wherein the projecting features of shape are formed by at least one of the following features:
a) axially extending ribs (70; 70, 70') at the rivet portion, which extend at least from a region adjacent the contact surface (22; 22'; 22"; 22", 22"', 22"") up to shortly before the free end (59) of the rivet portion (20), wherein the ribs (70) have a rounded shape in cross-section and have an at least substantially semi-circular shape with respect to the cylindrical jacket surface of the rivet portion (20); and
b) locally raised portions (70'; 90) at the free end (59) of the rivet portion (20), wherein the locally raised portions (90) are at least approximately circular in a plan view.

2. A functional element in accordance with claim 1,
**characterised in that**
it is a self-piercing element (10'; 10"), i.e. the free end (59) of the rivet portion (20) is designed for the piercing of a sheet metal part.

3. A functional element in accordance with one of the preceding claims,
**characterised in that**
the free end (59) of the rivet portion (20) has, at the radially inner side, a ring surface (50), for example in the form of a conical cutting surface, which diverges in the direction away from the ring-like contact surface, and, at the radially outer side, a rounded drawing surface (48).

4. A functional element in accordance with any one of the preceding claims,
**characterised in that**
the features a) and b) are present, wherein the raised portions (70', 90) at the free end (59) of the rivet portion (20) are aligned with the axially extending ribs (70), i.e. they each lie in the same axial plane.

5. A functional element in accordance with any one of the preceding claims, wherein the feature a) is present and raised portions (70') are provided at the free end (59) of the rivet portion (20) which are formed by the end-face ends of the radially extending ribs (70) which run out at the free end (59).

6. A functional element in accordance with any one of the preceding claims, wherein the radially extending ribs (70) in accordance with feature a) and/or the raised portions (70'; 90) in accordance with feature b) are distributed evenly about the central longitudinal axis (24) of the functional element (10'; 10").

7. A functional element in accordance with any one of the preceding claims, wherein the number of ribs (70) and/or of the raised portions (70'; 90) lies between 3 and 24.

8. A functional element in accordance with any one of the preceding claims, wherein the cut-outs (28) are formed in a head part (18; 18'; 18") by recesses approximately semi-circular in a plan view or by a flange region of the functional element (10'; 10") which project radially into the ring-like contact surface (22; 22'; 22"; 22", 22"'; 22"") open in the direction radially outwardly and have their largest cross-sectional dimensions at the radially outer surface of the head part (18; 18'; 18").

9. A functional element in accordance with any one of the preceding claims wherein the ring-like contact surface (22; 22'; 22"; 22", 22"'; 22"") is a conical surface apart from any noses (26; 26'; 28; 28, 28', 28") providing security against rotation and/or any cut-outs (28).

10. A functional element in accordance with any one of the preceding claims 1 to 8, wherein the ring-like contact surface has at least one ring-like region which lies on a radial plane perpendicular to the central longitudinal axis (24) of the functional element.

11. A functional element in accordance with any one of the preceding claims 1 to 8, wherein a ring-like groove is provided radially within a ring-like region of the ring-like contact surface, which lies in a radial plane perpendicular to the central longitudinal axis, with the groove extending around the rivet portion (20).

12. A functional element in accordance with claim 11, wherein the ring-like groove has at the radially outer side a surface which is obliquely set relative to the central longitudinal axis, i.e. the groove is at least approximately V-shaped in cross-section.

13. A functional element in accordance with claim 11, wherein ribs providing security against rotation, which extend in the radial direction, are provided in the ring-like groove.

14. A functional element in accordance with claim 13, wherein recesses, which interrupt the radially outer side of the ring-like groove and the ring-like region of the contact surface, are provided between the ribs providing security against rotation.

15. A functional element in accordance with any one of the preceding claims, wherein it is a bolt element (10') having a shaft part (16).

16. A functional element in accordance with claim 15, wherein a head part (18; 18") is provided, wherein the tubular rivet portion (40) is provided on the one side of the head part (18; 18') and the shaft part (16) is provided on the other side of the head part (18; 18') and the ring-like contact surface (22; 22'; 22") is provided at the side of the bolt element (10') facing the rivet portion (20).

17. A functional element in accordance with claim 16, wherein a head section having the ring-like contact surface is provided; wherein the shaft part of the bolt element is arranged at the same side of the head part as the ring-like contact surface and projects away from the latter and wherein the tubular rivet portion (20) is provided radially within the ring-like contact surface and radially outside of the shaft part.

18. A functional element in accordance with any one of the preceding claims 1 to 14, wherein it is a nut element (10").

19. A functional element in accordance with claim 18, wherein a head section having the ring-like contact surface is provided which merges into a tubular hollow shaft part projecting away from the head portion at the side of the contact surface, with the shaft part being surrounded by the tubular rivet portion (20), with the free end (59) of the shaft part being further removed from the ring-like contact surface than the free end (59) of the rivet portion (20).

20. A functional element in accordance with claim 19, wherein the free end (59) of the shaft part is designed for piercing a sheet metal part.

21. A functional element in accordance with claim 20, wherein a thread is provided in the head section and also in the region of the shaft part adjacent the head section.

22. A functional element in accordance with any one of the preceding claims in combination with a sheet metal part, wherein the sheet metal part (58') has a collar region (15), wherein the rivet portion (20) extends through the collar region and the collar region (15) is folded back on itself in the rolling procedure to form the rivet bead and comes to lie within a U-shaped receiver (56) which arises on the forming of the rivet bead, whereby the desired formation of the encapsulated folded-back sheet metal part (58') of the collar (15) is achieved.

## Revendications

1. Élément fonctionnel (10' ; 10") comprenant un tronçon fonctionnel (16, 17 ; 17') avec une partie de tête et avec un tronçon de rivet généralement de forme tubulaire, et une surface d'appui sur tôle (22 ; 22' ; 22" ; 22", 22'", 22""), dans lequel il est prévu des caractéristiques de forme en saillie (70 ; 70, 70' ; 90 ; 90, 70) pour entraîner la pièce en tôle (14) lors de la réalisation de la bordure de rivetage sur le tronçon de rivet tubulaire (20), sur l'extrémité frontale libre (59) du tronçon de rivet et/ou sur le côté radialement extérieur du tronçon de rivet (20), au moins dans la région voisine vers l'extrémité frontale libre (59) du tronçon de rivet (20), dans lequel des renfoncements (28) dans la partie de tête de l'élément avec les caractéristiques de forme en saillie (70 ; 70, 70' ; 90 ; 90, 70) sont orientés pour ce qui concerne leur angle, c'est-à-dire qu'ils sont agencés avec la même subdivision angulaire autour de l'axe longitudinal médian (24) de l'élément fonctionnel, et les caractéristiques de forme en saillie sont formées par l'une au moins des caractéristiques suivantes :
a) des nervures (70 ; 70, 70') s'étendant axialement sur le tronçon de rivet, qui s'étendent au moins depuis une région voisine de la surface d'appui (22 ; 22' ; 22" ; 22" 22"', 22"") au moins jusqu'à une courte distance avant l'extrémité frontale libre (59) du tronçon de rivet (20), lesdites nervures (70) présentant en section transversale une forme arrondie et présentant, par référence à la surface enveloppe cylindrique du tronçon de rivet (20), une conformation au moins sensiblement en forme de demi-cercle, et
b) des bosses locales (70' ; 90) à l'extrémité frontale libre (59) du tronçon de rivet (20), lesdites bosses locales (90) ayant au moins approximativement une forme circulaire en vue de dessus.

2. Élément fonctionnel selon la revendication 1, qui est un élément (10' ; 10") autopoinçonneur, c'est-à-dire que l'extrémité frontale libre (59) du tronçon de rivet (20) est conçue pour poinçonner une pièce en tôle.

3. Élément fonctionnel selon l'une des revendications précédentes, dans lequel l'extrémité frontale libre (59) du tronçon de rivet (20) comporte, sur le côté radialement intérieur, une surface annulaire (50) qui diverge en s'éloignant de la surface d'appui de forme annulaire, par exemple sous la forme d'une surface de coupe de forme conique, et comporte une surface de traînée arrondie (48) sur le côté radialement extérieur.

4. Élément fonctionnel selon l'une des revendications précédentes, dans lequel sont prévues les caractéristiques a) et b), dans lequel les bosses (70', 90) à l'extrémité frontale libre (59) du tronçon de rivet (20) sont alignées avec les nervures (70) s'étendant axialement, c'est-à-dire qu'elles sont respectivement dans le même plan axial.

5. Élément fonctionnel selon l'une des revendications précédentes, dans lequel est prévue la caractéristique a) et des bosses (70') sont prévues à l'extrémité frontale libre (59) du tronçon de rivet (20), qui sont formées par les extrémités frontales des nervures (70) s'étendant radialement, et qui se terminent à l'extrémité frontale libre (59).

6. Élément fonctionnel selon l'une des revendications précédentes, dans lequel les nervures s'étendant axialement (70) selon la caractéristique a) et/ou les bosses (70' ; 90) selon la caractéristique b) sont régulièrement réparties autour de l'axe longitudinal médian (24) de l'élément fonctionnel (10' ; 10").

7. Élément fonctionnel selon l'une des revendications précédentes, dans lequel le nombre des nervures (70) et/ou des bosses (70' ; 90) est entre 3 et 24.

8. Élément fonctionnel selon l'une des revendications précédentes, dans lequel les renfoncements (28) sont formés par des échancrures, approximativement en forme de demi-cercle en vue de dessus, dans une partie de tête (18 ; 18' ; 18") ou respectivement dans une région de bride de l'élément fonctionnel (10' ; 10"), qui pénètrent radialement dans la surface d'appui de forme annulaire (22 ; 22' ; 22" ; 22", 22"', 22""), sont ouvertes en direction radiale vers l'extérieur, et présentent leurs dimensions transversales maximum au niveau de la surface radialement extérieure de la partie de tête (18 ; 18' ; 18").

9. Élément fonctionnel selon l'une des revendications précédentes, dans lequel la surface d'appui de forme annulaire (22 ; 22' ; 22" ; 22", 22"', 22""), à l'exception d'éventuels ergots antirotation (26 ; 26' ; 28 ; 28, 28', 28") et/ou de renfoncements (28), est une surface de forme conique.

10. Élément fonctionnel selon l'une des revendications 1 à 8, dans lequel la surface d'appui de forme annulaire comprend au moins une zone de forme annulaire qui est appliquée sur un plan radial perpendiculaire à l'axe longitudinal médian (24) de l'élément fonctionnel.

11. Élément fonctionnel selon l'une des revendications précédentes 1 à 8, dans lequel il est prévu une gorge de forme annulaire, radialement à l'intérieur d'une zone de forme annulaire de la surface d'appui de forme annulaire, qui est située dans un plan radial perpendiculaire à l'axe longitudinal médian, gorge qui s'étend tout autour du tronçon de rivet (20).

12. Élément fonctionnel selon la revendication 11, dans lequel la gorge de forme annulaire présente, sur le côté radialement extérieur, une surface dressée en oblique par rapport à l'axe longitudinal médian, c'est-à-dire que la gorge est au moins approximativement en forme de V en section transversale.

13. Élément fonctionnel selon la revendication 11, dans lequel des nervures antirotation s'étendant en direction radiale sont prévues dans la gorge de forme annulaire et coiffent celle-ci partiellement ou totalement.

14. Élément fonctionnel selon la revendication 13, dans lequel il est prévu des échancrures, qui interrompent le côté radialement extérieur de la gorge de forme annulaire et la zone de forme annulaire de la surface d'appui, entre les nervures antirotation.

15. Élément fonctionnel selon l'une des revendications précédentes, qui est un élément de boulon (10') avec une partie de tige (16).

16. Élément fonctionnel selon la revendication 15, dans lequel il est prévu une partie de tête (18 ; 18'), dans lequel le tronçon de rivet de forme tubulaire (20) est prévu sur un côté de la partie de tête (18 ; 18'), et la partie de tige (16) est prévue sur l'autre côté de la partie de tête (18 ; 18'), et la surface d'appui de forme annulaire (22 ; 22' ; 22") est prévue sur le côté de l'élément de boulon (10') tourné vers le tronçon de rivet (20).

17. Élément fonctionnel selon la revendication 16, dans lequel il est prévu un tronçon de tête qui présente la surface d'appui de forme annulaire, la partie de tige de l'élément de boulon est agencée sur le même côté de la partie de tête que la surface d'appui de forme annulaire et dépasse en éloignement de celle-ci, et le tronçon de rivet de forme tubulaire (20) est prévu radialement à l'intérieur de la surface d'appui de forme annulaire et radialement à l'extérieur de la partie de tige.

18. Élément fonctionnel selon l'une des revendications précédentes 1 à 14, qui est un élément en écrou (10").

19. Élément fonctionnel selon la revendication 18, dans lequel il est prévu un tronçon de tête qui comporte la surface d'appui de forme annulaire, qui se transforme en une partie de tige de forme tubulaire creuse qui se dresse en éloignement du tronçon de tête sur le côté de la surface d'appui et qui est entouré par le tronçon de rivet de forme tubulaire (20), dans lequel l'extrémité frontale libre (59) de la partie de tige est plus éloignée de la surface d'appui de forme annulaire que l'extrémité frontale libre (59) du tronçon de rivet (20).

20. Élément fonctionnel selon la revendication 19, dans lequel l'extrémité frontale libre (59) de la partie de tige est conçue pour poinçonner une pièce en tôle.

21. Élément fonctionnel selon la revendication 20, dans lequel il est prévu un pas de vis dans le tronçon de tête ainsi que dans la zone de la partie de tige voisine du tronçon de tête.

22. Élément fonctionnel selon l'une des revendications précédentes en combinaison avec une pièce en tôle, dans lequel la pièce en tôle (58') comporte une zone en collerette (15), dans lequel le tronçon de rivet (20) s'étend à travers la zone en collerette et, lors de l'opération de galetage pour réaliser le rebord de rivetage, la zone en collerette (15) est rabattue sur elle-même et vient se placer à l'intérieur d'une réception (56) en forme de U, qui apparaît lors de la réalisation du rebord de rivetage, grâce à quoi on obtient la réalisation souhaitée de la pièce en tôle (58') rabattue sur elle-même et encapsulée de la zone en collerette (15).
